# EUROPEAN PATENT APPLICATION

(11) **EP 4 668 834 A1**
(43) Date of publication of application: **24.12.2025**
(21) Application number: 23922770.5
(22) Date of filing: 17.02.2023
(51) Int. Cl.: H04W 24/10, H04W 16/28, H04W 52/02

(54) **TERMINAL AND MEASUREMENT METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); JIANG, Yu, Beijing, 100190 (CN); FENG, Ru, Beijing, 100190 (CN); LI, Anxin, Beijing, 100190 (CN)
(74) Representative: Hoffmann Eitle
(86) International application number: PCT/JP2023/005742
(87) International publication number: WO 2024/171436

(57) **Abstract**

A terminal includes: a reception unit configured to receive, from a base station, a CSI (Channel State Information) report configuration in which a plurality of different spatial assumptions are applied; a control unit configured to perform measurement based on the CSI report configuration; and a transmission unit configured to transmit a CSI report to the base station, based on a result of the measurement. The control unit determines a feedback type to be reported to the base station, based on the CSI report configuration.

## Description

### TECHNICAL FIELD

The present invention relates to a terminal and a measurement method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Literature 1).

In addition, in the 3GPP (registered trademark) Release 18, in order to achieve the environmental sustainability, carbon neutrality, the SDGs (Sustainable Development Goals), the operation cost reduction, and the like, increased importance is placed on network energy savings and energy saving methods are being discussed (for example, Non-Patent Literature 2).

### CITATION LIST

### Non-Patent Literature

Non-Patent Literature 1: 3GPP TS 38.300 V17.3.0 (2022-12)
Non-Patent Literature 2: "New WID: Network energy savings for NR", RP-223540, 3GPP TSG RAN Meeting #98e, 3GPP, December, 2022
Non-Patent Literature 3: 3GPP TS 38.331 V17.3.0 (2022-12)
Non-Patent Literature 4: 3GPP TR 36.897 V13.0.0 (2015-06)
Non-Patent Literature 5: 3GPP TS 38.211 V17.4.0 (2022-12)

### SUMMARY OF INVENTION

### TECHNICAL PROBLEM

In order to achieve the network energy savings, the efficient adaptation of spatial elements in the CSI (Channel state information) report and the beam management is being discussed. However, a specific method has not been specified.

The present invention has been made in view of the above points and is intended to reduce the power consumption on the network side by efficiently performing the CSI (Channel state information) report in the wireless communication system.

### SOLUTION TO PROBLEM

According to the disclosed technology, a terminal is provided. The terminal includes: a reception unit configured to receive, from a base station, a CSI (Channel State Information) report configuration in which a plurality of different spatial assumptions are applied; a control unit configured to perform measurement based on the CSI report configuration; and a transmission unit configured to transmit a CSI report to the base station, based on a result of the measurement. The control unit determines a feedback type to be reported to the base station, based on the CSI report configuration.

### ADVANTAGEOUS EFFECTS OF INVENTION

According to the disclosed technique, the power consumption on the network side can be reduced by efficiently performing the CSI (Channel state information) report in the wireless communication system.

### BRIEF DESCRIPTION OF DRAWINGS

[Fig. 1] is a drawing illustrating an example of a configuration of a wireless communication system.
[Fig. 2] is a drawing for describing an example of a configuration related to the CSI report.
[Fig. 3] is a drawing for describing an example (1) of an antenna OFF mode.
[Fig. 4] is a drawing for describing an example (2) of an antenna OFF mode.
[Fig. 5] is a drawing for describing an example (3) of an antenna OFF mode.
[Fig. 6] is a drawing for describing an example (1) of a configuration related to a plurality of CSI reports.
[Fig. 7] is a drawing for describing an example (2) of a configuration related to a plurality of CSI reports.
[Fig. 8] is a drawing for describing an example of a configuration related to a trigger for a plurality of CSI reports related to an embodiment of the present invention.
[Fig. 9] is a drawing for describing an example (1) of a configuration related to a feedback type for a plurality of CSI reports related to an embodiment of the present invention.
[Fig. 10] is a drawing for describing an example (2) of a configuration related to a feedback type for a plurality of CSI reports related to an embodiment of the present invention.
[Fig. 11] is a drawing for describing an example (3) of a configuration related to a feedback type for a plurality of CSI reports related to an embodiment of the present invention.
[Fig. 12] is a drawing for describing an example (1) of a configuration related to resources for a plurality of CSI reports related to an embodiment of the present invention.
[Fig. 13] is a drawing for describing an example (2) of a configuration related to resources for a plurality of CSI reports related to an embodiment of the present invention.
[Fig. 14] is a drawing for describing an example (3) of a configuration related to resources for a plurality of CSI reports related to an embodiment of the present invention.
[Fig. 15] is a drawing for describing an example (4) of a configuration related to resources for a plurality of CSI reports related to an embodiment of the present invention.
[Fig. 16] is a drawing for describing an example (5) of a configuration related to resources for a plurality of CSI reports related to an embodiment of the present invention.
[Fig. 17] is a drawing for describing an example (6) of a configuration related to resources for a plurality of CSI reports related to an embodiment of the present invention.
[Fig. 18] is a drawing for describing an example (7) of a configuration related to resources for a plurality of CSI reports related to an embodiment of the present invention.
[Fig. 19] is a drawing for describing an example (8) of a configuration related to resources for a plurality of CSI reports related to an embodiment of the present invention.
[Fig. 20] is a drawing for describing an example (9) of a configuration related to resources for a plurality of CSI reports related to an embodiment of the present invention.
[Fig. 21] is a drawing for describing an example (1) of a configuration related to a codebook for a plurality of CSI reports related to an embodiment of the present invention.
[Fig. 22] is a drawing for describing an example (2) of a configuration related to a codebook for a plurality of CSI reports related to an embodiment of the present invention.
[Fig. 23] is a drawing for describing an example (3) of a configuration related to a codebook for a plurality of CSI reports related to an embodiment of the present invention.
[Fig. 24] is a drawing illustrating an example of a functional structure of a base station 10 related to an embodiment of the present invention.
[Fig. 25] is a drawing illustrating an example of a functional structure of a terminal 20 related to an embodiment of the present invention.
[Fig. 26] is a drawing illustrating an example of a hardware structure of the base station 10 or the terminal 20 related to an embodiment of the present invention.
[Fig. 27] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

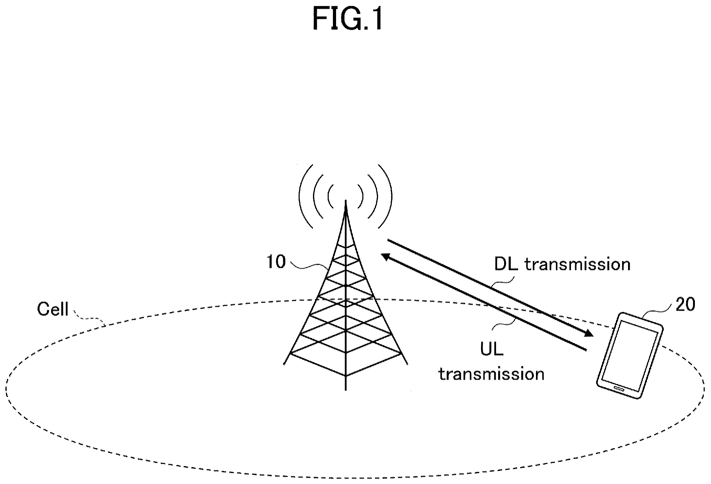

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

Here, in order to achieve the network energy savings, the efficient adaptation of spatial elements in the CSI (Channel state information) report and the beam management is being discussed. In addition, in a procedure related to the CSI report, the efficient adaptation of a power offset value between PDSCH and CSI-RS is being discussed.

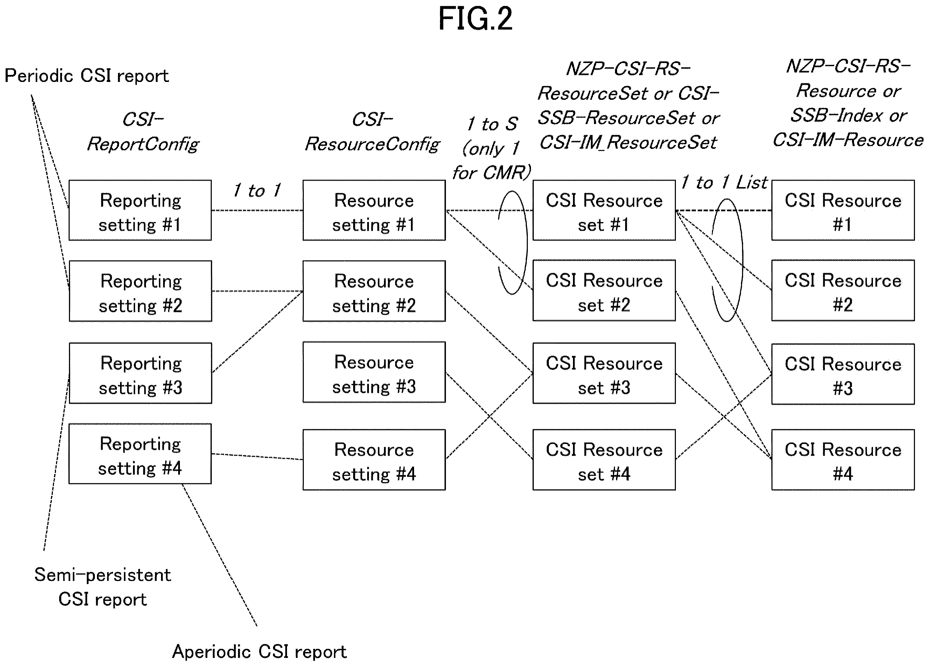

Fig. 2 is a drawing for describing an example of a configuration related to the CSI report. With respect to the terminal 20, information described in the following 1) and 2) may be configured by the base station 10 for the sake of CSI measurement and the CSI measurement.
1) Report configuration (Reporting setting). The corresponding information element may be CSI-ReportConfig (refer to Non-Patent Literature 3). The report configuration is information used for indicating, to the terminal 20, how to perform reporting.
2) Resource configuration (Resource setting). The corresponding information element may be CSI-ResourceConfig. The resource configuration is information used for indicating, to the terminal 20, the CSI-RS/SSB resource set used for CSI/L1-RSRP measurement.

For example, as illustrated in Fig. 2, the periodic CSI report, the semi-persistent CSI report, and the aperiodic CSI report can be configured. CSI-ReportConfig specifies CSI-ResourceConfig in a 1-to-1 manner. CSI-ReportConfig includes CodebookConfig, and CodebookConfig includes nrOfAntennaPorts, typeI-SinglePanel-ri-Restriction, and ri-Restriction.

As illustrated in Fig. 2, CSI-ResourceConfig specifies CSI resource sets in a 1-to-S manner. The CSI resource sets may be, for example, NZP-CSI-RS-ResourceSet, CSI-SSB-ResourceSet, or CSI-IM_ResourceSet. The same number of ports are configured for all of the CSI-RS resources included in one SCI resource set. It is to be noted that only one CSI resource set may be configured as CMR (Channel measurement resource).

As illustrated in Fig. 2, the CSI resource set specifies the CSI resources in a 1-to-1 list manner. The CSI resources may be, for example, NZP-CSI-RS-Resource, SSB-Index, or CSI-IM-Resource. The power offset between PDSCH and CSI-RS, and CSI-RS-ResourceMapping including the number of ports, are included in NZP-CSI-RS-Resource, for example.

As described above, the number of CSI-RS ports for CSI report is explicitly indicated by NZP-CSI-RS-Resource and CodebookConfig included in CSI-ReportConfig. The power offset between PDSCH and CSI-RS is indicated by powerControlOffset included in NZP-CSI-RS-Resource.

Next, an antenna OFF mode will be described. The mapping between TxRUs (Tranceiver Units) and antennas and the antenna OFF mode are specified (refer to Non-Patent Literature 4). The sub-array antenna corresponds to a plurality of antennas to which one TxRU is connected. In the sub-array antenna, antennas connected to different TxRUs are separated. In the full-connection array, all TxRUs are connected to all antennas.

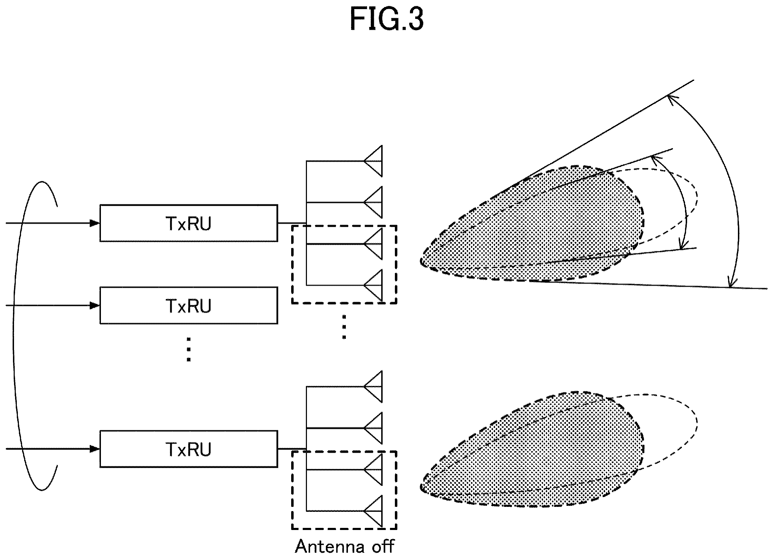

Fig. 3 is a drawing for describing an example (1) of an antenna OFF mode. Fig. 3 is an example of Mode 1-1 in the sub-array. As illustrated in Fig. 3, some antennas in each sub-array are OFF. There is no change in the number of ports, and the beamforming gain decreases.

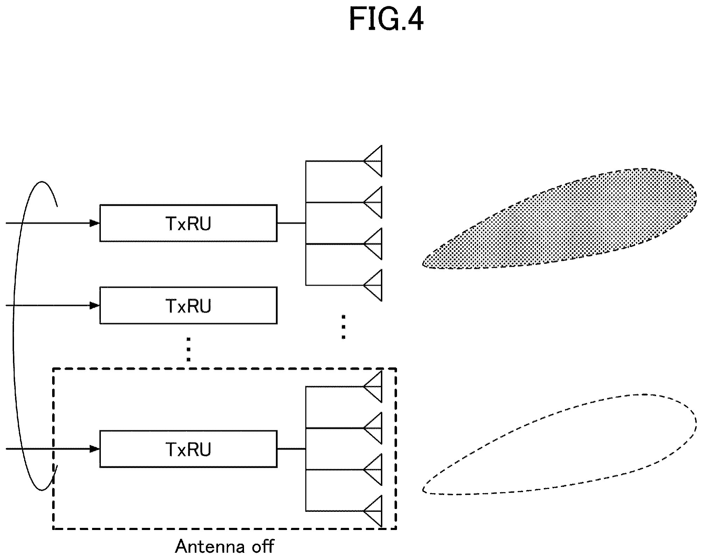

Fig. 4 is a drawing for describing an example (2) of an antenna OFF mode. Fig. 4 is an example of Mode 1-2 in the sub-array. As illustrated in Fig. 4, all of the antennas in the sub-array are OFF. The number of ports decreases and there is no change in the beamforming gain.

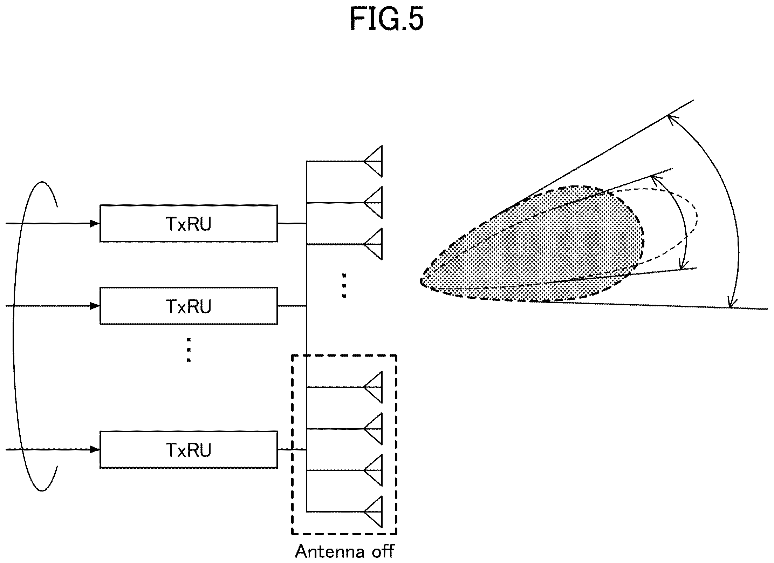

Fig. 5 is a drawing for describing an example (3) of an antenna OFF mode. Fig. 5 is an example of a full-connection array mode 2. As illustrated in Fig. 5, some of the antennas are OFF. There is no change in the number of ports, and the beamforming gain decreases.

Here, a plurality of CSIs based on different antennas and different power assumptions are expected to be reported to the base station 10 in order for the base station 10 to perform adaptation determination with respect to the antenna adaptation in the spatial domain and the power adaptation in the power domain.

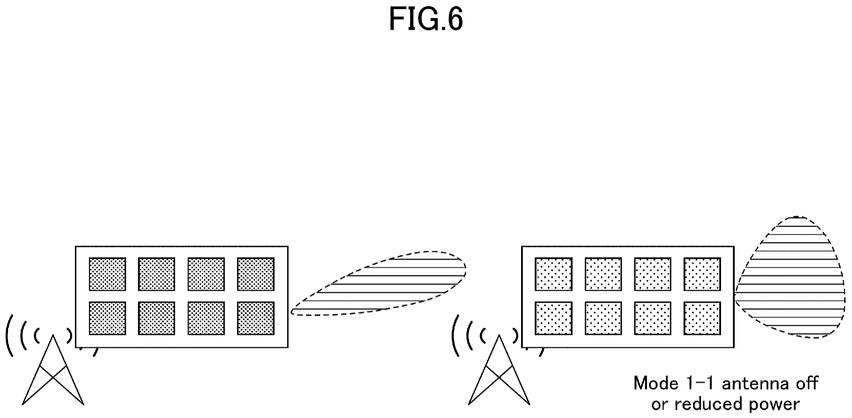

Fig. 6 is a drawing for describing an example (1) of a configuration related to a plurality of CSI reports. As illustrated in Fig. 6, a plurality of CSIs are reported in which a plurality of states with antenna OFF or reduced power in Mode 1-1 of the sub-array antenna are measured.

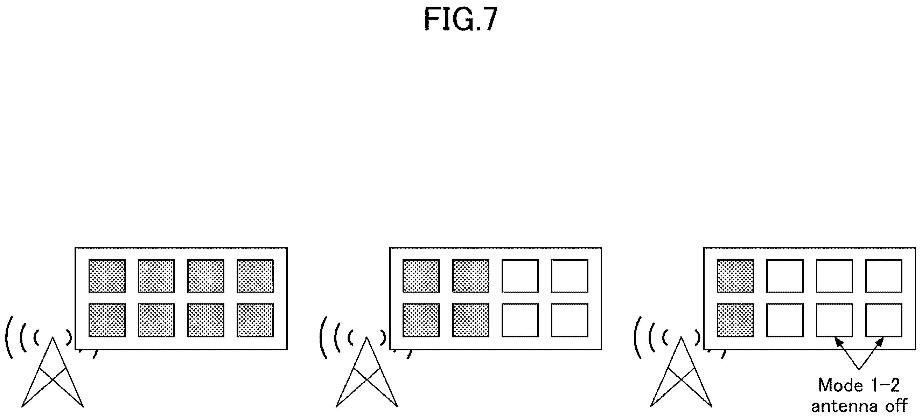

Fig. 7 is a drawing for describing an example (2) of a configuration related to a plurality of CSI reports. As illustrated in Fig. 7, a plurality of CSIs are reported in which a plurality of states with reduced ports due to antenna OFF in Mode 1-2 of the sub-array antenna are measured.

In the conventional CSI configuration and reporting for performing a single configuration and a single report, there are problems as described in the following 1) to 3) in performing a plurality of CSI reports.
1) In a case where the base station 10 generates a plurality of CSI report configurations in which most of the information is duplicated, the complexity of the base station 10 for generating the configurations increases and the indication payloads increase.
2) The complexity of the terminal 20 increases due to the plurality of measurement procedures for the plurality of CSI reports.
3) In a case where a plurality of CSI reports are independently performed, the CSI feedback payloads increase.

Accordingly, in order to report a plurality of CSIs with different spatial and/or power assumptions, procedures of reporting a plurality of CSIs may be enhanced as described in the following Operation 1) to Operation 4).
Operation 1) Perform triggering of a plurality of CSI reports. For example, which of the spatial and/or power assumptions are to be measured and reported will be determined.
Operation 2) Perform configuration of feedback types (feedback quantity) for a plurality of CSI reports. For example, in order to reduce the CSI report related overhead, which configuration is to be a common configuration and which configuration is to be an independent configuration will be determined.
Operation 3) Perform RS resource configuration and measurement for a plurality of CSI reports. For example, how the terminal 20 is to obtain CSI resource configurations to which different port assumptions are applied will be determined.
Operation 4) Perform determination of a codebook configuration for a plurality of CSI reports. For example, how the terminal 20 is to obtain a plurality of codebook configurations to which different port configurations are applied will be determined.

For example, the above-described Operation 1), the above-described Operation 2), the above-described Operation 3), and the above-described Operation 4) may be used for a plurality of CSI reports related to a plurality of spatial assumptions. In addition, the above-described Operation 1) and the above-described Operation 2) may be used for a plurality of CSI reports related to a plurality of power assumptions.

Hereinafter, Operation 1) will be described.

A plurality of CSI reports corresponding to different spatial and/or power assumptions may be triggered. The base station 10 may include a plurality of spatial and power assumptions for a plurality of CSI reports in a single CSI report configuration.

A spatial assumption may include a part of or all of the following 1) to 3).
1) The number of active ports or a factor, or the number of active TxRUs or a factor. Adapted to the antenna OFF mode 1-2. For example, in a case where the factor is 0.25, the number of active ports is obtained by 0.25 × (the number of all of the configured ports).
2) Active or valid port indexes. Adapted to the antenna OFF mode 1-2. For example, in a case where the number of the entire ports is 8 and the port indexes {0, 1, 2, 3} are valid, the port indexes {4, 5, 6, 7} are invalid or OFF.
3) Mapping modes between ports or TxRUs and antennas. For example, the number of active antennas per port or per TxRU, or an active factor corresponding to the number of antennas per port or per TxRU. Adapted to the antenna OFF mode 1-1 and mode 2. For example, in a case where the factor is 0.25, the number of active ports per port or per TxRU is obtained by 0.25 × (the number of antennas configured per port or per TxRU).

A power assumption may include a part of or all of the following 1) to 3).
1) Power or PSD (Power spectrum density) level of PDSCH and/or CSI-RS REs (Resource Elements).
2) A power or PSD offset between PDSCH and CSI-RS REs.
3) An additional offset to the conventional configured power or PSD offset between PDSCH and CSI-RS REs. For example, an additional offset to powerControlOffset included in NZP-CSI-Resource.

The spatial and power related assumptions may be separately indicated, or may be jointly indicated. One assumption may correspond to one CSI report. Table 1 and Table 2 illustrate an example of spatial and power related assumptions being jointly indicated.

**[Table 1]**

| Assumption index | Active/valid port indexes | Additional power offset to powerControlOffset |
|---|---|---|
| 0 | {0, 1, 2, 3, 4, 5, 6, 7} | 0 dB |
| 1 | {0, 1, 2, 3, 4, 5, 6, 7} | -3dB |
| 2 | {0, 1, 2, 3} | 0 dB |
| 3 | {0, 1, 2, 3} | -3dB |

**[Table 2]**

| Assumption index | Number of ports | Factor of active antenna per port | Additional power offset to powerControlOffset |
|---|---|---|---|
| 0 | 8 | 1 (no change) | 0 dB |
| 1 | 8 | 1 | -3dB |
| 2 | 8 | 0.5 (reduced to half) | -3dB |
| 3 | 4 | 1 | 0 dB |

As illustrated in Table 1, active port indexes and an additional power offset may be associated with an assumption index to be indicated to the terminal 20.

As illustrated in Table 2, the number of ports, a factor of active antennas per port, and an additional power offset may be associated with an assumption index to be indicated to the terminal 20.

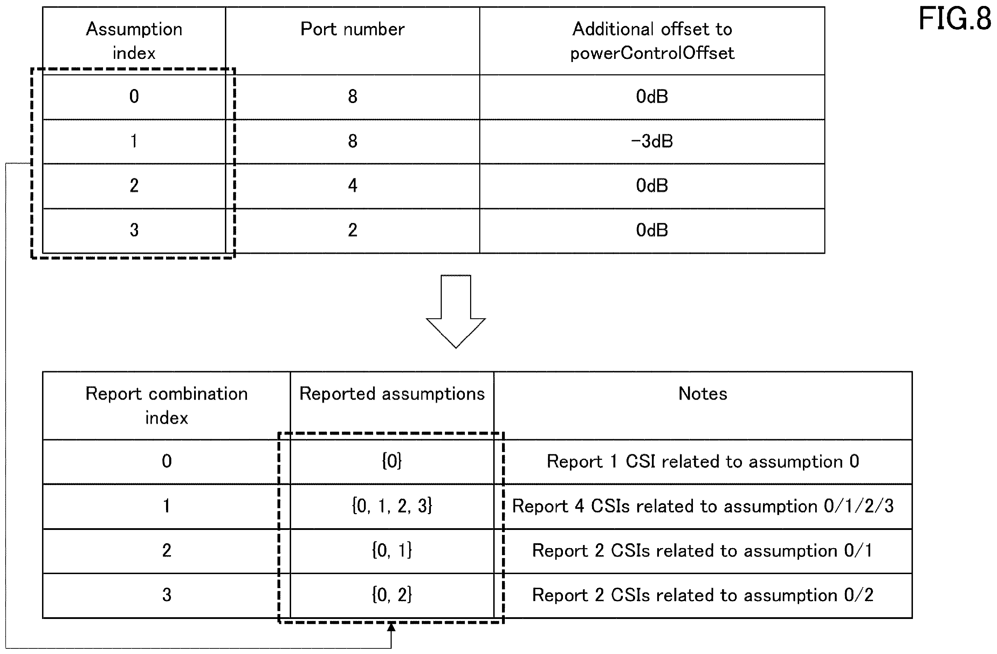

The spatial and/or power related assumptions may be indicated by using methods described in the following 1) to 3).
1) The indication may be performed by using RRC (Radio Resource Control) signaling alone, by using MAC-CE (Medium Access Control - Control Element) alone, or by using DCI (Downlink Control Information) alone. Fig. 8 is a drawing for describing an example of a configuration related to a trigger for a plurality of CSI reports related to an embodiment of the present invention. For example, an assumption index in a table in the upper part of Fig. 8 may be indicated to the terminal 20 by using RRC signaling, and the terminal 20 may perform measurement or CSI reporting based on the number of ports and the additional power offset corresponding to the assumption index. It is to be noted that DCI may be UE specific DCI or UE group DCI.
2) Candidates may be configured by using RRC signaling, and an assumption index may be selected by using MAC-CE and/or DCI. For example, the table in the upper part of Fig. 8 may be configured by using RRC signaling, and an assumption index in the table or a bitmap of the assumption index may be indicated by using MAC-CE and/or DCI. For example, in a case where a bitmap "1011" is indicated, three CSIs corresponding to the assumption indexes {0, 2, 3} may be reported. For example, in a case where an index #2 is indicated, the CSI corresponding to the assumption index 2 may be reported.
   In addition, for example, the table in the upper part of Fig. 8 may be configured by using RRC signaling, and specific spatial and/or power related assumption candidates may be specified by using MAC-CE and/or DCI. For example, in a case where the number of ports 4 is indicated by using MAC-CE and/or DCI, the CSI of the spatial and/or power related assumptions corresponding to the number of ports 4 in the table may be reported. That is, the CSI corresponding to the assumption index 2 may be reported. For example, in a case where the number of ports 4 is indicated by using MAC-CE and/or DCI, the CSI of the spatial and/or power related assumptions corresponding to the number of ports 4 or less in the table may be reported. That is, the CSIs corresponding to the assumption indexes 2 and 3 may be reported.
3) Candidates and candidate combinations may be configured either by using RRC signaling or by using RRC signaling and MAC-CE, the combination index may be indicated by using MAC-CE or DCI. For example, the table in the upper part of Fig. 8 and the table in the lower part of Fig. 8 may be configured by using RRC signaling, and a combination index in the table in the lower part of Fig. 8 may be specified by using MAC-CE and/or DCI. In addition, for example, the table in the upper part of Fig. 8 may be configured by using RRC signaling, the table in the lower part of Fig. 8 may be configured by using MAC-CE, and a combination index in the table in the lower part of Fig. 8 may be specified by using DCI. As described above, one or more assumption indexes are included in the reported assumptions and specified by a report combination index.

In addition, in a case where a CSI report is configured as described above and an RS resource (for example, CSI-RS resource) or a configuration (for example, codebook) does not support the CSI report, the terminal 20 may drop or ignore the CSI report or may perform a report of CSI measurement that is most recently configured without updating the CSI report.

In addition, the above-described plurality of CSI reports may have the following time domain behavior properties. For example, the above-described plurality of CSI reports may be applied to only one of periodic reporting, semi-persistent reporting, and aperiodic reporting. For example, the above-described plurality of CSI reports may be applied to all of periodic reporting, semi-persistent reporting, and aperiodic reporting. For example, the above-described plurality of CSI reports may be applied to periodic reporting, semi-persistent reporting, and aperiodic reporting.

In addition, the UE capabilities described below may be reported from the terminal 20 to the base station 10.

The UE capability indicating whether or not to support a plurality of CSI reports. The UE capability indicating the maximum number of CSI reports that are configurable by a single CSI report configuration (for example, CSI-ReportConfig). The UE capability indicating the maximum number of CSI report configurations (for example, CSI-ReportConfig) for enhancement of a plurality of CSI reports. The UE capability indicating supported spatial and/or power related assumptions. For example, the spatial and/or power related assumptions may be the number of reduced antenna ports, the number of reduced ports, the reduced power level, the spatial and time transmission time, and the like.

In addition, an indication indicating whether or not to enable a plurality of CSI reports may be transmitted from the base station 10 to the terminal 20 by using RRC signaling, MAC-CE, or DCI.

According to the above-described Operation 1), the base station 10 can efficiently trigger the CSI reports corresponding to a plurality of spatial and/or power related assumptions for the terminal 20.

Hereinafter, Operation 2) will be described.

One of or a plurality of CSI types (CSI quantity) may be configured by an information element reportQuantity included in CSI-ReportConfig from among CRI (CSI-RS Resource Index) (beam), RI (Rank indicator), PMI (Precoding matrix indicator), CQI (Channel quality indicator), LI (Layer indicator) (best layer) and reported.

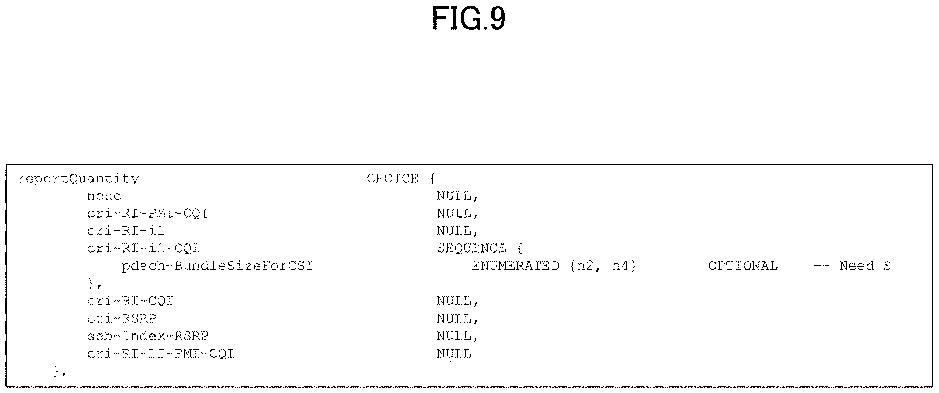

Fig. 9 is a drawing for describing an example (1) of a configuration related to a feedback type for a plurality of CSI reports related to an embodiment of the present invention. As illustrated in Fig. 9, for example, the reportQuantity may be configurable to include cri-RI-PMI-CQI, cri-RI-i1, cri-RI-i1-CQI, cri-RI-CQI, cri-RSRP, or the like.

With respect to a plurality of CSI reports, some of the CSI values may be configured commonly to different reports or different assumptions. The payload size of the reports can be reduced by excluding the duplicated reports. For example, CRI, RI, and PMI may be commonly configured and CQI may be not commonly configured, between a plurality of CSI reports with different power level assumptions. That is, CQI may be different in a case where a different power level is assumed. For example, CRI, RI, PMI, and CQI may be not commonly configured between a plurality of CSI reports with different assumptions of the number of ports. That is, CRI, RI, PMI, and CQI may be different in a case where a different number of ports is assumed.

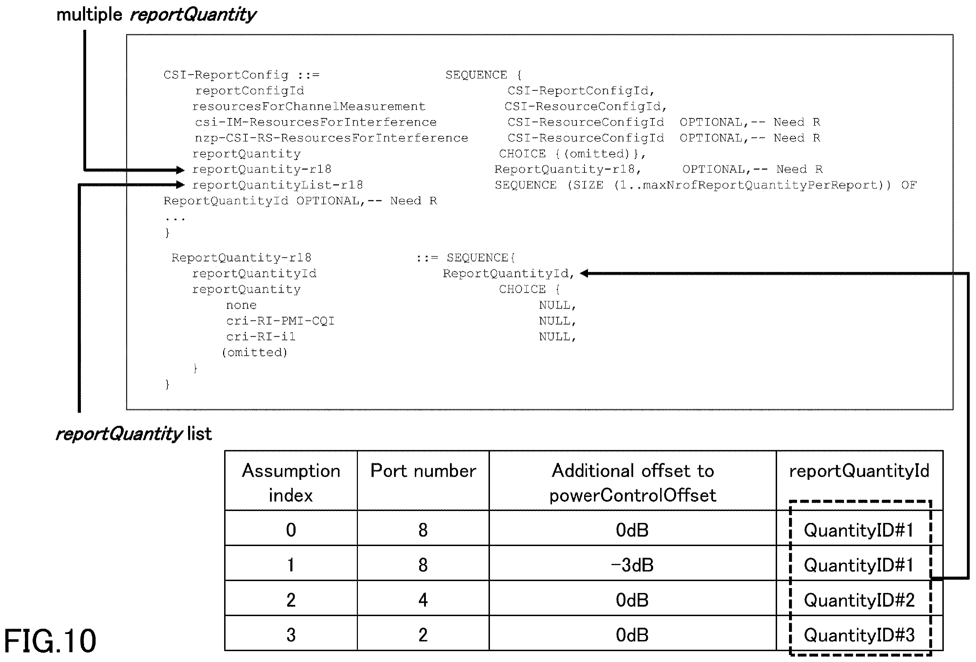

Operation 2-1) The configured plurality of CSI reports may use either the same or different reportQuantity configuration to indicate the CSI types to be reported as described in the following 1) or 2).
1) The same reportQuantity configuration may be used. For example, only one reportQuantity may be configured in CSI-ReportConfig. The terminal 20 may report one or more CSI types indicated by reportQuantity for a plurality of CSI reports that are configured based on different spatial and/or power assumptions. For example, in a case where cri-RI-PMI-CQI is configured in reportQuantity, the terminal 20 may report CRI, RI, PMI, and CQI for a plurality of CSI reports that are configured based on different spatial and/or power assumptions.
2) A different reportQuantity configuration may be used for a different spatial and/or power assumption. Fig. 10 is a drawing for describing an example (2) of a configuration related to a feedback type for a plurality of CSI reports related to an embodiment of the present invention.

For example, first, the base station 10 configures a plurality of reportQuantity configurations or configures a reportQuantity list, as illustrated in Fig. 10. Next, the base station 10 maps one reportQuantity to a specific CSI report or to a specific spatial and/or power assumption. In an example of Fig. 10, reportQuantityId is mapped to an assumption index corresponding to an assumption of a number of ports and an additional offset.

The reportQuantity-r18, reportQuantityList-r18, and reportQuantityId may be newly defined. The maximum number of reportQuantity-r18 included in reportQuantityList-r18 may be defined in advance, or may be configured based on the UE capability.

The mapping between reportQuantity and a CSI report or a spatial and/or power assumption may be a) or b) as described below.
a) The mapping to the CSI reports or spatial and/or power assumptions may be performed by the ordering of reportQuantity (for example, by the ordering included in the reportQuantity list).
b) The mapping may be explicitly indicated by using RRC signaling, MAC-CE, or DCI. For example, reportQuantityId or a reportQuantity index in the reportQuantity list may be indicated. For example, the indication may be QuantityID#1 as illustrated in Fig. 10.

Operation 2-2) The base station 10 may indicate, to the terminal 20, whether or not one or more CSI values are independent or common between a plurality of CSI reports or a plurality of spatial and/or power assumptions to be reported. For example, with respect to the reports in a case where the CSI values are independent or common, an operation described in the following 1) or 2) may be performed.
1) Independent CSI values may be applied to the plurality of CSI reports or to the plurality of spatial and/or power assumptions. For example, CRI, RI, PMI, and CQI may be reported independently for each assumption in a case where cri-RI-PMI-CQIs are configured to be an assumption index #1 and an assumption index #2, .
2) Several CSI values may be commonly applied to the plurality of CSI reports or to the plurality of spatial and/or power assumptions. All of the CSI types may be reported for a selected CSI report or spatial and/or power assumption, and only several CSI types may be reported for other non-selected CSI reports or spatial and/or power assumptions. The terminal 20 may derive the independent CSI types for other CSI reports or spatial and/or power assumptions, based on the common CSI types for the selected CSI reports or spatial and/or power assumptions.

For example, in a case where cri-RI-PMI-CQIs are configured to be an assumption index #1 and an assumption index #2: CRI, RI, PMI, and CQI may be reported for the assumption index #1; and only CQI may be reported and CRI, RI, and PMI may be omitted for the assumption index #2. With respect to the assumption index #2, CRI, RI, and PMI for the assumption index #1 may be reused. The terminal 20 may derive CQI for the assumption index #2, based on CRI, RI, and PMI for the assumption index #1.

In addition, with respect to the selected CSI report or spatial and/or power assumption for which all of the CSI types are to be reported, the determination may be performed as described in the following 1) to 3).
1) May be explicitly indicated. For example, which CSI report or which spatial and/or power assumption is to be selected from among all of the CSI reports or the spatial and/or power assumptions may be indicated by an index or a bitmap.
2) May be determined based on the configured order of the CSI reports or of the spatial and/or power assumptions. For example, the determination may be performed based on the order in the table illustrated in Fig. 8, that is, based on the order of the assumption indexes or the report combination indexes. For example, the CSI report or the spatial and/or power assumption that is configured for the index #0 in the first row may be selected to be determined.
3) May be determined based on the index of the CSI report or the spatial and/or power assumption. For example, the CSI report or the spatial and/or power assumption corresponding to the smallest or the largest index may be selected to be determined.

The base station 10 may indicate, to the terminal 20, the mode indicating whether the CSI values are independent or common by using RRC signaling, MAC-CE, or DCI. For example, the indication may be performed as described in the following 1) or 2).

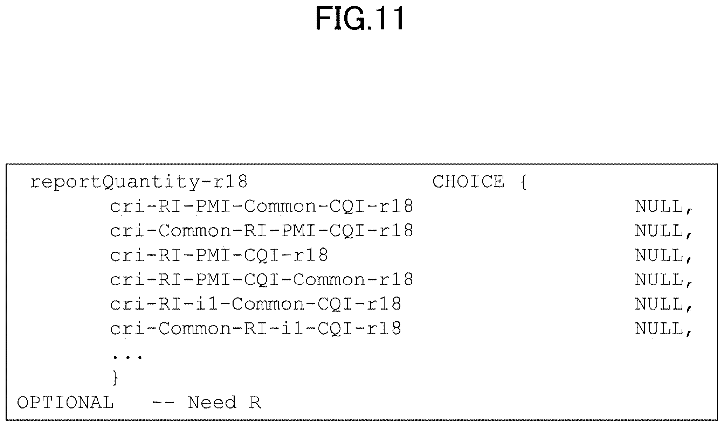

1) Fig. 11 is a drawing for describing an example (3) of a configuration related to a feedback type for a plurality of CSI reports related to an embodiment of the present invention. As illustrated in Fig. 11, a new CSI type may be defined for reportQuantity. For example, cri-RI-PMI-Common-CQI-r18 may mean that CRI, RI, and PMI are common and CQI is independent. For example, cri-RI-PMI-CQI-r18 may mean that there is no common CSI type and CRI, RI, PMI, and CQI are independent. For example, cri-RI-PMI-CQI-Common-r18 may mean that CRI, RI, PMI, and CQI are common and there is no independent CSI type.
2) Indicators that newly defines report modes may be defined as illustrated in Table 3.

**[Table 3]**

| Mode | Meaning | Notes |
|---|---|---|
| Mode 1 | Independent | Independent CSI values for configured CSI reports |
| Mode 2 | Common CRI | Common CRI value for configured CSI reports, others are independent |
| Mode 3 | Common CRI/RI | Common CRI/RI value for configured CSI reports, others are independent |
| Mode 3 | Common CRI/RI/PMI | Common CRI/RI/PMI value for configured CSI reports, others are independent |

For example, in a case where the mode 4 in Table 3 is configured and cri-RI-PMI-CQIs are configured to be an assumption #1 and an assumption #2, CRI, RI, and PMI may be commonly reported and CQI may be independently reported for the assumption #1 and the assumption #2. For example, in a case where the mode 4 in Table 3 is configured and cri-RI-CQIs are configured to be an assumption #1 and an assumption #2, CRI and RI may be commonly reported and CQI may be independently reported for the assumption #1 and the assumption #2.

According to the above-described Operation 2), the feedback amount of the plurality of CSI reports can be efficiently configured.

Hereinafter, Operation 3) will be described.

Conventionally, with respect to the legacy CSI report for which CSI-RS is measured, only one NZP-CSI-RS-ResourceSet is configured for the channel measurement of one CSI report. The number of ports is the same in all of the NZP-CSI-RS-Resources included in the NZP-CSI-RS-ResourceSet.

Accordingly, with respect to the RS resource configuration and measurement for a plurality of CSI reports, operations described in the following Operation 3-1) to Operation 3-3) may be performed.
Operation 3-1) The legacy RS resource configuration may be used, all of the channels of configured resources may be estimated by the terminal 20, and one or more CSIs may be derived from one or more spatial assumptions by the terminal 20, based on an indication from the base station 10.
Operation 3-2) The legacy RS resource configuration may be used, the RS resources may be derived by the terminal 20 based on one or more spatial assumptions from the base station, and the CSI report may be performed by the terminal 20 by measuring the derived resources.
Operation 3-3) Enhanced RS resource configuration may be performed in which one or more RS resources are configured in which different spatial assumptions are applied to one CSI report configuration.

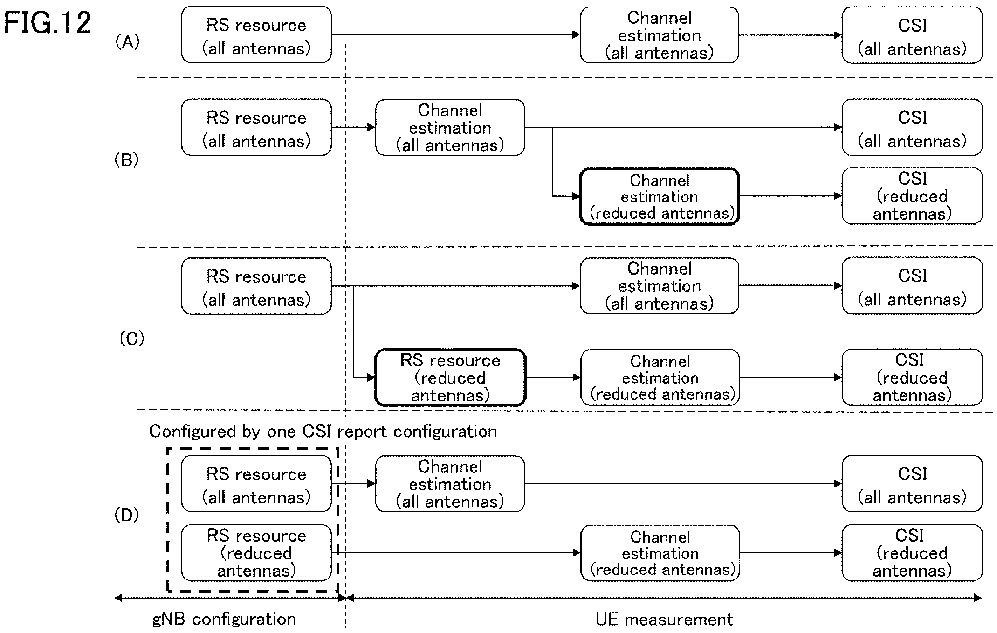

Fig. 12 is a drawing for describing an example (1) of a configuration related to resources for a plurality of CSI reports related to an embodiment of the present invention. The (A) in Fig. 12 illustrates the resource configuration and measurement related to the conventional CSI report. The (B) in Fig. 12 corresponds to the above-described Operation 3-1) in which the reduced antennas are configured at the timing of channel estimation. The (C) in Fig. 12 corresponds to the above-described Operation 3-2) in which the reduced antennas are configured at the timing of RS resources. The (D) in Fig. 12 corresponds to the above-described Operation 3-3) in which the reduced antennas are configured for the RS resources based on one CSI report configuration at the timing of configuration by the base station 10.

The above-described Operation 3) is used for the CSI report in which a plurality of spatial assumptions are applied. The antenna OFF mode in which different spatial assumptions are applied may be supported as described below.

The above-described Operation 3-1) supports the antenna OFF mode 1-2 and is characterized by relatively low accuracy and less complexity. The above-described Operation 3-2) supports the antenna OFF mode 1-2 and is characterized by higher accuracy and greater complexity. The above-described Operation 3-3) supports the antenna OFF mode 1-1, the antenna OFF mode 1-2, and the antenna OFF mode 1-3 and is characterized by the highest flexibility, the highest accuracy, and the greatest complexity.

Hereinafter, Operation 3-1) will be described. The legacy RS resource configuration may be used, all of the channels of configured resources may be estimated by the terminal 20, and one or more CSIs may be derived from one or more spatial assumptions by the terminal 20, based on an indication from the base station 10. The spatial assumptions may be derived based on the following operations.

Operation 3-1-1) The base station 10 may indicate indexes of valid or invalid ports or may indicate the configured port pattern. For example, in a case where RS resources of eight ports from index #0 to index #7 are configured, the base station 10 may indicate valid port indexes {0, 1, 2, 3} for the reduced antennas and the terminal 20 may extract channels of ports 0, 1, 2, and 3 from among the 8-port RSs and may derive 4-port CSIs in accordance with the indication. In addition, for example, in a case where RS resources of eight ports from index #0 to index #7 are configured, the base station 10 may indicate the pattern #1 and the pattern #2 illustrated in Table 4 for the sake of reduced antennas and the terminal 20 may derive 4-port CSIs in which channels corresponding to the ports 0, 2, 4, and 6 are extracted from among the 8-port RSs and may derive 2-port CSIs in which channels corresponding to the ports 0 and 5 are extracted from among the 8-port RSs.

**[Table 4]**

| Index | Valid port indexes |
|---|---|
| Pattern #0 | 0, 1, 2, 3 |
| Pattern #1 | 0, 2, 4, 6 |
| Pattern #2 | 0, 5 |
| Pattern #3 | 0, 1, 2, 3, 4, 5, 6, 7 (all valid) |

Operation 3-1-2) The base station 10 may indicate the number of ports of the reduced antennas or indexes of the number of ports. For example, in a case where RS resources of eight ports from index #0 to index #7 are configured, the base station 10 may indicate the index #1 and the index #2 of the number of ports illustrated in Table 5 for the sake of reduced antennas and the terminal 20 may derive 4-port CSIs in which channels corresponding to the ports 0, 1, 2, and 3 are extracted from among the 8-port RSs and may derive 2-port CSIs in which channels corresponding to the ports 0 and 5 are extracted from among the 8-port RSs.

**[Table 5]**

| Index | Number of ports | Valid port indexes |
|---|---|---|
| 0 | 8 | 0, 1, 2, 3, 4, 5, 6, 7 (all valid) |
| 1 | 4 | 0, 1, 2, 3 |
| 2 | 2 | 0, 5 |
| 3 | 1 | 0 |

Operation 3-1-3) The base station 10 may indicate the lowest value of the reduced number of ports or the lowest value of the index of the number of ports. The terminal 20 may derive CSIs corresponding to the lowest number of ports to the number of ports of the configured resources. For example, in a case where 8-port RS resources from index #0 to index #7 are configured, the base station 10 may indicate the index #2 of the number of ports illustrated in Table 5 for the sake of reduced antennas and the terminal 20 may derive 2-port CSIs corresponding to the index #2, 4-port CSIs corresponding to the index #1, and 8-port CSIs corresponding to the index #0.

The above-described indication from the base station 10 may be indicated by using RRC signaling, MAC-CE, or group or UE specific DCI.

Hereinafter, Operation 3-2) will be described. The legacy RS resource configuration may be used, the RS resources may be derived by the terminal 20 based on one or more spatial assumptions from the base station, and the CSI report may be performed by the terminal 20 by measuring the derived resources.

The terminal 20 may derive the CSI-RS resources of the reduced number of ports as described below. The CSI-RS resources of the reduced number of ports may be derived from the CSI-RS configuration in the conventional technical specification (CDM size, the number of CDM groups, positions, or the like), or may be derived from the CSI-RS configuration that is not included in the conventional technical specification.
Operation 3-2-1) The CDM size will be reduced.
Operation 3-2-2) The number of CDM groups will be reduced.
Operation 3-2-3) The reduction of the CDM size and the reduction of the number of CDM groups will be combined.
Operation 3-2-3-1) First, the CDM size will be reduced to a pre-defined size (for example, noCDM or fd-CDM2) and then the number of CDM groups will be reduced.
Operation 3-2-3-2) First, the number of CDM groups will be reduced to a pre-defined size (for example, one or two groups) and then the CDM size will be reduced.
Operation 3-2-3-3) Available port reduction method will be pre-defined.

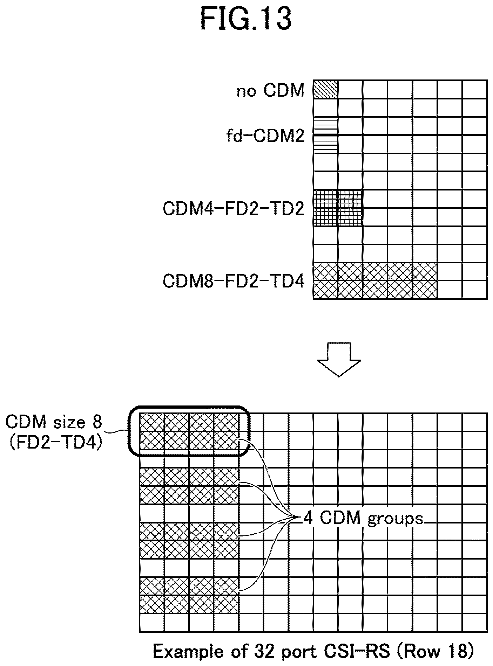

Fig. 13 is a drawing for describing an example (2) of a configuration related to resources for a plurality of CSI reports related to an embodiment of the present invention. Table 6 is an example of a CSI-RS configuration (refer to Non-Patent Literature 5).
Fig. 13 is an example of CSI-RS resources in which Row 18 in Table 6 is configured: CDM size 8 - FD2 - TD4, 4 CDM groups, and 32-port CSI-RS. According to the CDM size 8 × the number of CDM groups 4, 32 ports are configured. In addition, with respect to the CDM types (refer to Non-Patent Literature 3), noCDM, fd-CDM2, CDM4-FD2-TD2, and CDM8-FD2-TD4 are defined as illustrated in Fig. 13.

**[Table 6]**

| Row | Number of CSI-RS ports | CDM size | Number of CDM groups | Row | Number of CSI-RS ports | CDM size | Number of CDM groups |
|---|---|---|---|---|---|---|---|
| 1 | 1 | 1 | 1 | 10 | 12 | 4 | 3 |
| 2 | 1 | 1 | 1 | 11 | 16 | 2 | 8 |
| 3 | 2 | 1 | 2 | 12 | 16 | 4 | 4 |
| 4 | 4 | 2 | 2 | 13 | 24 | 2 | 12 |
| 5 | 4 | 2 | 2 | 14 | 24 | 4 | 6 |
| 6 | 8 | 2 | 4 | 15 | 24 | 8 | 3 |
| 7 | 8 | 2 | 4 | 16 | 32 | 2 | 16 |
| 8 | 8 | 4 | 2 | 17 | 32 | 4 | 8 |
| 9 | 12 | 2 | 6 | 18 | 32 | 8 | 4 |

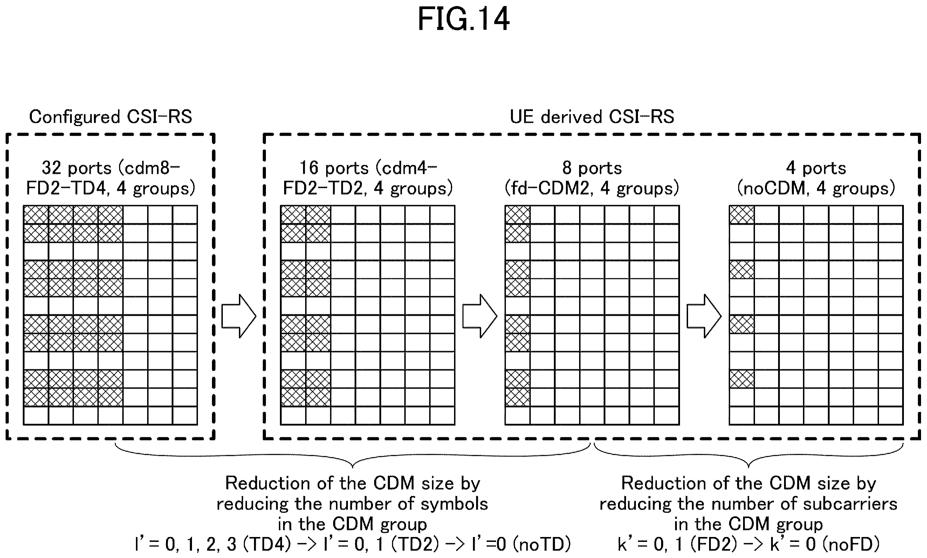

Fig. 14 is a drawing for describing an example (3) of a configuration related to resources for a plurality of CSI reports related to an embodiment of the present invention. Fig. 14 corresponds to the above-described Operation 3-2-1), and is an example of reducing the CDM size, for example, from 32 ports to 16 ports, to 8 ports, and to 4 ports. The reduction from 32 ports to 16 ports and the reduction from 16 ports to 8 ports are reductions of the CDM size in the CDM groups achieved by reducing the number of symbols. The reduction from 8 ports to 4 ports is a reduction of the CDM size in the CDM groups achieved by reducing the number of subcarriers.

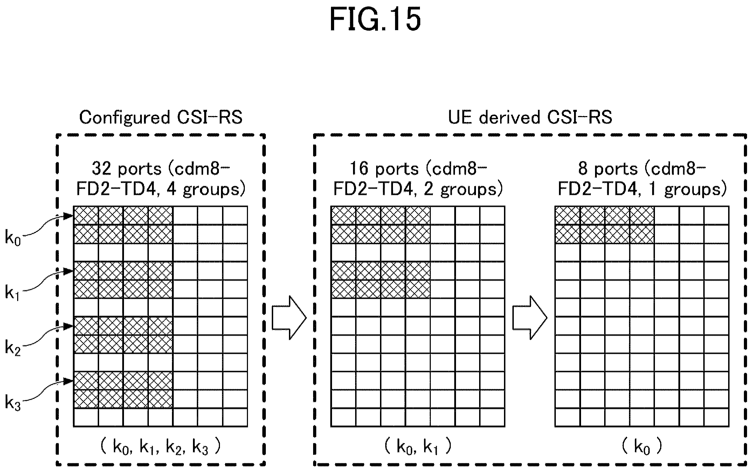

Fig. 15 is a drawing for describing an example (4) of a configuration related to resources for a plurality of CSI reports related to an embodiment of the present invention. Fig. 15 corresponds to the above-described Operation 3-2-2), and is an example of reducing the number of the CDM groups in a manner in which 32 ports are reduced to 16 ports, and to 8 ports. As illustrated in Fig. 15, k0, k1, k2, and k3 are starting subcarrier indexes of the CDM groups, k2 and k3 are removed at the time of 16 ports, and k1, k2, and k3 are removed at the time of 8 ports.

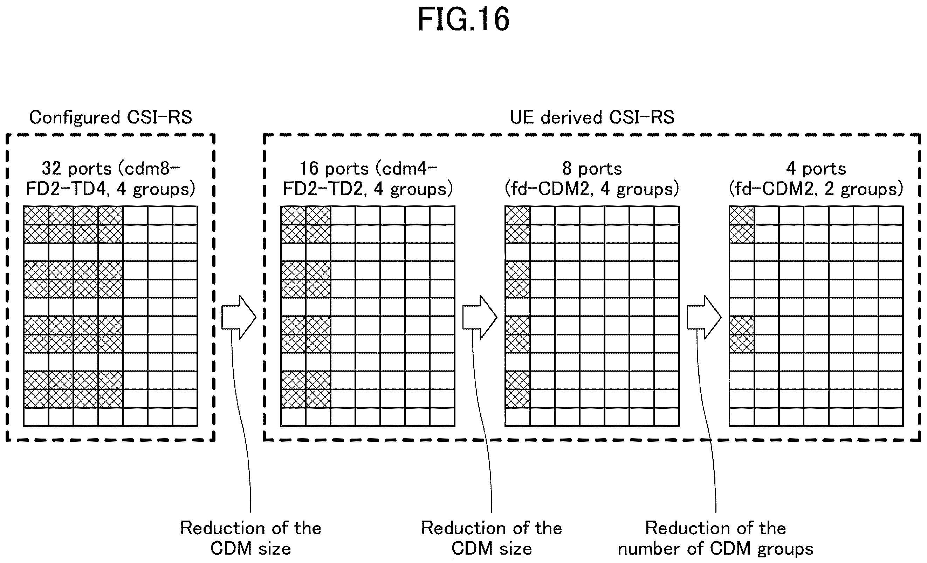

Fig. 16 is a drawing for describing an example (5) of a configuration related to resources for a plurality of CSI reports related to an embodiment of the present invention. Fig. 16 corresponds to the above-described Operation 3-2-3-1), and is an example in which the CDM size is reduced to fd-CDM2 first, and then, the number of CDM groups is reduced. As illustrated in Fig. 16, 32 ports include cdm8-FD2-TD4 and four groups and 16 ports include cdm4-FD2-TD2 and four groups as a result of the CDM size reduction. As a result of further reducing the CDM size, eight ports include fd-CDM2 and four groups. As a result of further reducing the number of CDM groups, four ports include fd-CDM2 and two groups.

Hereinafter, Operation 3-3) will be described. Enhanced RS resource configuration may be performed in which one or more RS resources are configured in which different spatial assumptions are applied to one CSI report configuration.

The terminal 20 may measure NZP-CSI-RS Resources to which a specific spatial assumption is applied, based on the UE capability and/or on an indication from the base station 10. The base station 10 may configure RS resources to which one or more spatial assumptions are applied as described below.

Operation 3-3-1) NZP-CSI-RS-Resources with different CSI-RS ports may be configured. That is, nrofPorts may be configured in one NZP-CSI-RS-ResourceSet.

A subset of all CSI-RS ports defined in the technical specification may be supported as the above-described CSI-RS ports. The all CSI-RS ports defined in the technical specification may be 1 port, 2 ports, 4 ports, 8 ports, 16 ports, or 32 ports.

The maximum number of different ports of NZP-CSI-RS-Resource and the allowed number of ports of NZP-CSI-RS-Resource in NZP-CSI-RS-ResourceSet may be pre-defined or may be configured based on the UE capability. For example, up to three types of the number of ports including 2 ports, 4 ports, 8 ports may be supported in NZP-CSI-RS-ResourceSet based on the UE capability.

Operation 3-3-2) Resource sets exceeding one resource set corresponding to different gNB spatial assumptions may be configured in the CSI resource configuration.

The CSI resource configuration may refer to the resources for channel and/or interference measurement. For example, the CSI resource configuration may refer to resourcesForChannelMeasurement, csi-IM-ResourcesForInterference, or nzp-CSI-RS-ResourcesForInterference.

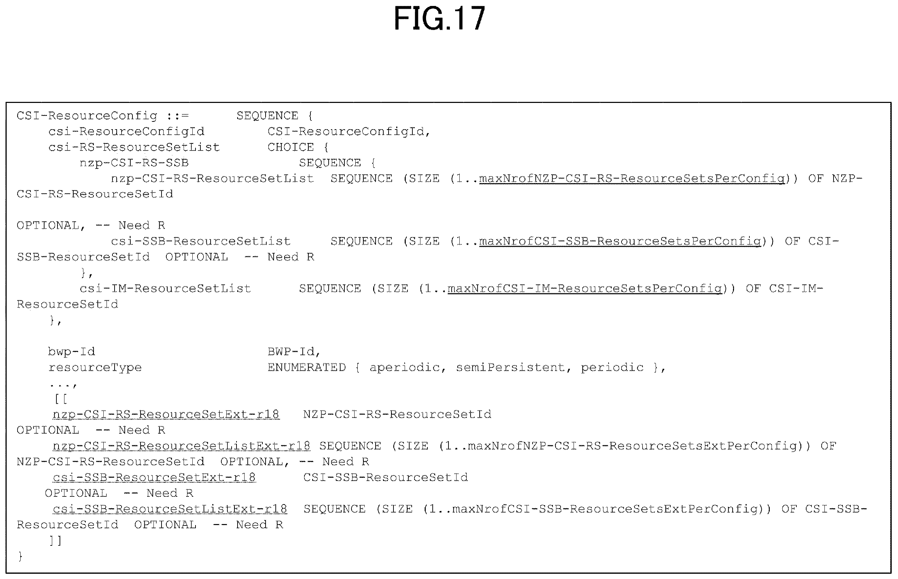

Fig. 17 is a drawing for describing an example (6) of a configuration related to resources for a plurality of CSI reports related to an embodiment of the present invention.

In order to configure the resource sets exceeding one resource set, the values of the parts underlined with solid lines illustrated in Fig. 17 may be values exceeding one for a plurality of CSI reports. The values may be configured based on an indication from the base station 10 and/or the UE capability. In other words, the values described in the following 1) to 3) may be values exceeding one.
1) The maxNrofNZP-CSI-RS-ResourceSetsPerConfig for nzp-CSI-RS-ResourceSetList included in CSI-ResourceConfig.
2) The maxNrofCSI-SSB-ResourceSetsPerConfig for csi-SSB-ResourceSetList included in CSI-ResourceConfig.
3) The maxNrofCSI-IM-ResourceSetsPerConfig for csi-IM-ResourceSetList included in CSI-ResourceConfig.

In addition, in order to configure resource sets exceeding one resource set, as illustrated in the parts underlined with dotted lines in Fig. 17, the extended resource sets or resource set list may be introduced for the configuration of resources for channel and/or interference measurement. One extended resource set may include one or more CSI resources for which one gNB spatial assumption is applied. In a case of configuring the extended resource set, the maximum number of the resource sets in the list may be configured based on an indication from the base station 10 and/or the UE capability.

As illustrated in Fig. 17, the extended resource set may be nzp-CSI-RS-ResourceSetExt-r18, csi-SSB-ResourceSetExt-r18, or the like. The extended resource set list may be nzp-CSI-RS-ResourceSetListExt-r18 and the maximum number of elements maxNrofNZP-CSI-RS-ResourceSetsExtPerConfig, csi-SSB-ResourceSetListExt-r18 and the maximum number of elements maxNrofCSI-SSB-ResourceSetsExtPerConfig, or the like.

Operation 3-3-3) Resource configurations exceeding one resource configuration may be configured for the channel and/or interference measurement in the CSI report configuration (CSI-ReportConfig).

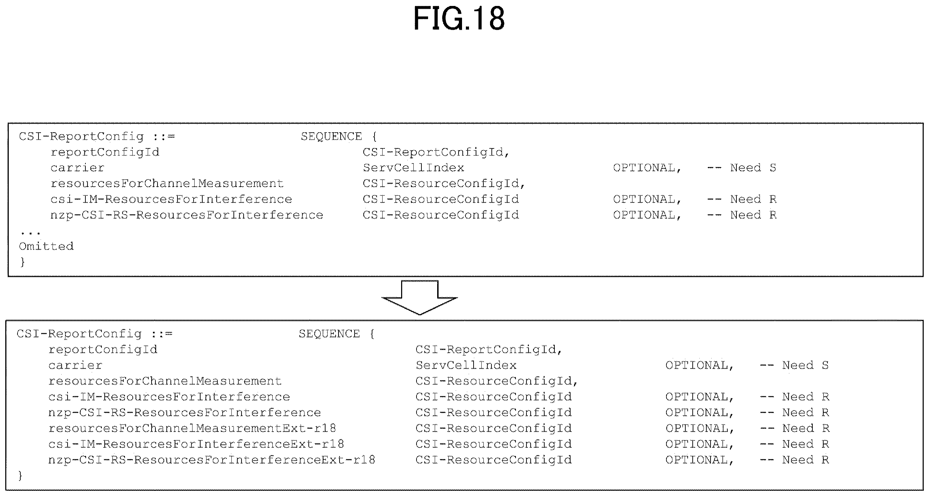

Fig. 18 is a drawing for describing an example (7) of a configuration related to resources for a plurality of CSI reports related to an embodiment of the present invention. As illustrated in Fig. 18, the extended resource configuration may be defined for the channel and/or interference measurement. One extended resource configuration may include one or more CSI resources for which one gNB spatial assumption is applied. As illustrated in Fig. 18, the extended resource configuration may be resourcesForChannelMeasurementExt-r18, csi-IM-ResourcesForInterferenceExt-r18, nzp-CSI-RS-ResourcesForInterferenceExt-r18, or the like.

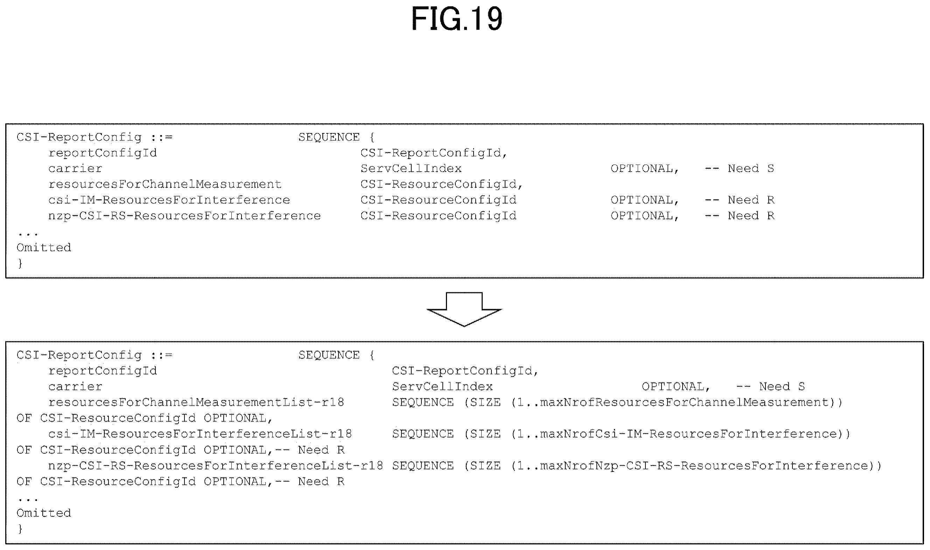

Fig. 19 is a drawing for describing an example (8) of a configuration related to resources for a plurality of CSI reports related to an embodiment of the present invention. As illustrated in Fig. 19, the resource configuration list may be defined for the channel and/or interference measurement. The maximum number of the number of resource configurations included in the list may be configured based on an indication from the base station 10 and/or the UE capability. The extended resource configuration may be defined for the channel and/or interference measurement. As illustrated in Fig. 19, the resource configuration list may be resourcesForChannelMeasurementList-r18 and the maximum number of elements maxNrofResourcesForChannelMeasurement, csi-IM-ResourcesForInterferenceList-r18 and the maximum number of elements maxNrofCsi-IM-ResourcesForInterference, or nzp-CSI-RS-ResourcesForInterferenceList-r18 and the maximum number of elements maxNrofNzp-CSI-RS-ResourcesForInterference.

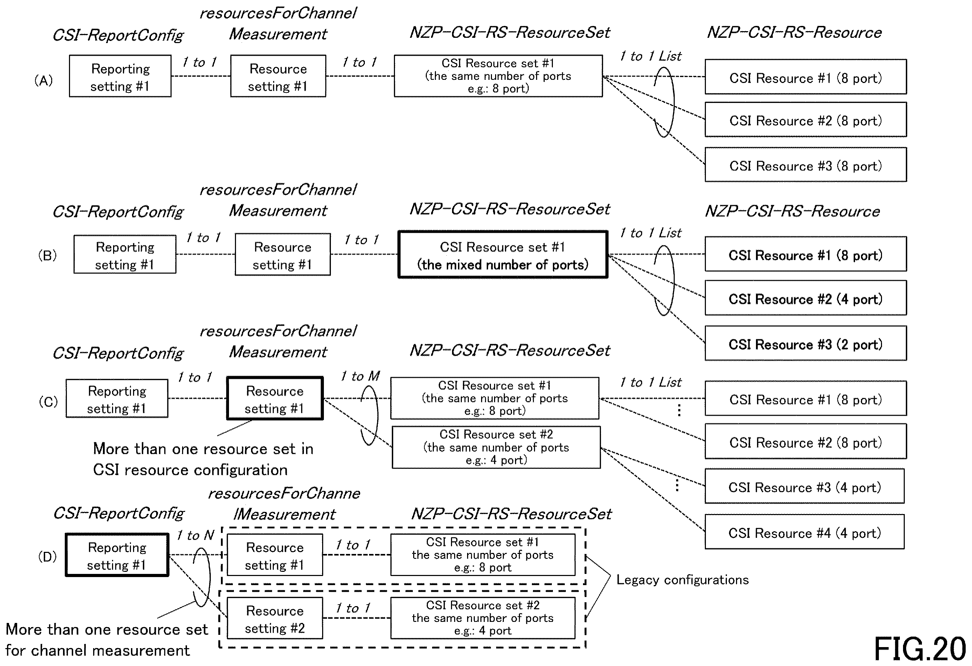

Fig. 20 is a drawing for describing an example (9) of a configuration related to resources for a plurality of CSI reports related to an embodiment of the present invention. The (A) in Fig. 20 is a resource configuration related to the conventional CSI report for which one spatial assumption is applied. The (B) in Fig. 20 is a resource configuration related to the CSI report corresponding to the Operation 3-3-1) for which a plurality of spatial assumptions are applied, and a plurality of ports are introduced for NZP-CSI-RS-ResourceSet. The (C) in Fig. 20 is a resource configuration related to the CSI report corresponding to the Operation 3-3-2) for which a plurality of spatial assumptions are applied, and resource sets exceeding one resource set are introduced for the CSI resource configuration. The (D) in Fig. 20 is a resource configuration related to the CSI report corresponding to the Operation 3-3-3) for which a plurality of spatial assumptions are applied, and resource sets exceeding one resource set are introduced for the channel measurement.

According to the above-described Operation 3), resources used for measurement for a plurality of CSI reports can be efficiently configured.

Hereinafter, Operation 4) will be described. The codebook configuration for a plurality of CSI reports will be determined. For example, how the terminal 20 is to obtain a plurality of codebook configurations to which different port configurations are applied will be determined.

Conventionally, one CodebookConfig is configured in one CSI-ReportConfig. CodebookConfig specifies a codebook type, and the number of antenna ports and the codebooks are restricted. The codebook types are TypeI-single/multi-panel, TypeII, TypeII PortSelection, and the like. The codebooks and the ranks for TypeI and TypeII are restricted including the number of antenna ports.

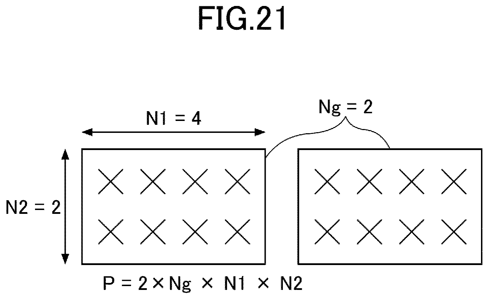

Fig. 21 is a drawing for describing an example (1) of a configuration related to a codebook for a plurality of CSI reports related to an embodiment of the present invention. As illustrated in Fig. 21, N1 is the number of ports in the horizontal direction, N2 is the number of ports in the vertical direction, and Ng is the number of panels. The number of CSI-RS ports P is calculated according to 2 (cross polarization) × Ng × N1 × N2.

The above-described Operation 4) may include the methods described in the following Operation 4-1) to Operation 4-3). It is to be noted that the codebook configuration may correspond to CodebookConfig, and the CSI report configuration may correspond to CSI-ReportConfig.
Operation 4-1) The base station 10 configures one legacy codebook configuration for one CSI report configuration. The terminal 20 infers an appropriate codebook, based on a pre-defined method or on an indication from the base station 10.
Operation 4-2) The base station 10 configures one enhanced codebook configuration for which different spatial assumptions are applied for one CSI report configuration. The terminal 20 selects an appropriate codebook for CSI measurement, based on the spatial assumption indicated by the base station 10.
Operation 4-3) The base station 10 configures a plurality of enhanced codebook configurations for which different spatial assumptions are applied for one CSI report configuration. The terminal 20 selects an appropriate codebook for CSI measurement, based on the spatial assumption indicated by the base station 10.

Hereinafter, Operation 4-1) will be described.

The terminal 20 infers a codebook by assuming the reduced number of panels, the reduced number of horizontal ports, and the reduced number of vertical ports for the spatial assumption with the reduced number of antennas. The base station 10 indicates spatial assumptions with reduced number of antennas, and the terminal 20 infers a codebook based on the pre-defined rules described below based on the pre-defined rules described below.
Rule 1) Only one of the number of panels, the number of horizontal ports, and the number of vertical ports is to be reduced.
Rule 2) A combination of two or more from the number of panels, the number of horizontal ports, and the number of vertical ports is to be reduced. For example, first, the number of panels is reduced to a pre-defined level (for example, 1), and then, the number of vertical ports is reduced to a pre-defined level (for example, 1), and then, the number of horizontal ports is reduced to a pre-defined level (for example, 1). The order of reduction of the number of panels, the number of vertical ports, and the number of horizontal ports can be changed. In addition, for example, when a 16-port codebook with Ng = 1, N2 = 2, and N1 = 4 is configured, in a case where the base station 10 requests 8-port CSI, the terminal 20 may reduce the N2 to 1 to obtain P = 8. In addition, in a case where the base station 10 requests 4-port CSI, the terminal 20 may reduce the N1 to 2 to obtain P = 4.

The base station 10 may indicate information of panels, horizontal ports, and vertical ports corresponding to the spatial assumption with reduced number of antennas, and the terminal 20 may use a codebook based on the indication.

For example, the base station 10 may indicate some of or all of the values of the number of panels, the number of horizontal ports, and the number of vertical ports.

For example, the base station 10 may indicate an index in a table in which the number of panels, the number of horizontal ports, and the number of vertical ports are defined. The table may be pre-configured by RRC signaling, MAC-CE, DCI, or broadcast information.

Table 7 is an example of a table used for indicating Ng, N1, and N2 that indicate different spatial assumptions.

**[Table 7]**

| Index | Ng | N1 | N2 |
|---|---|---|---|
| 0 | 2 | 2 | 2 |
| 1 | 1 | 2 | 2 |
| 2 | 1 | 2 | 1 |
| 3 | 1 | 1 | 1 |

For example, when a table illustrated by Table 7 (the original configuration is index #0) is configured, in a case where the base station 10 indicates the index #2, the terminal 20 may apply Ng = 1, N1 = 2, N2 = 1 (P = 4) for the CSI measurement.

The above-described method may be applied for one or more codebook types. For example, the above-described method may be applied for the codebook types of TypeI-single-panel, TypeI-multi-panel, TypeII, and TypeII PortSelection.

Some of the codebook configurations configured in the codebook may be only valid for the spatial assumption with full antenna, or with both the full antenna and the reduced antenna. For the invalid case, the invalid configurations may be configured to be default values or pre-defined values.

The above-described some of the codebook configurations may be, for example, the rank and/or codebook restrictions, or codebookMode of TypeI codebook. In addition, the above-described some of the codebook configurations may be, for example, the rank and/or codebook restrictions, phaseAlphabetSize, subbandAmplitude, or numberOfBeams of TypeII codebook.

Hereinafter, Operation 4-2) will be described.

The enhanced codebook configuration may be enabled to configure a plurality of port assumptions. The enhanced codebook configuration may have either the same codebook type or different codebook types (that is, TypeI-single/multi-panel, TypeII, TypeII PortSelection).

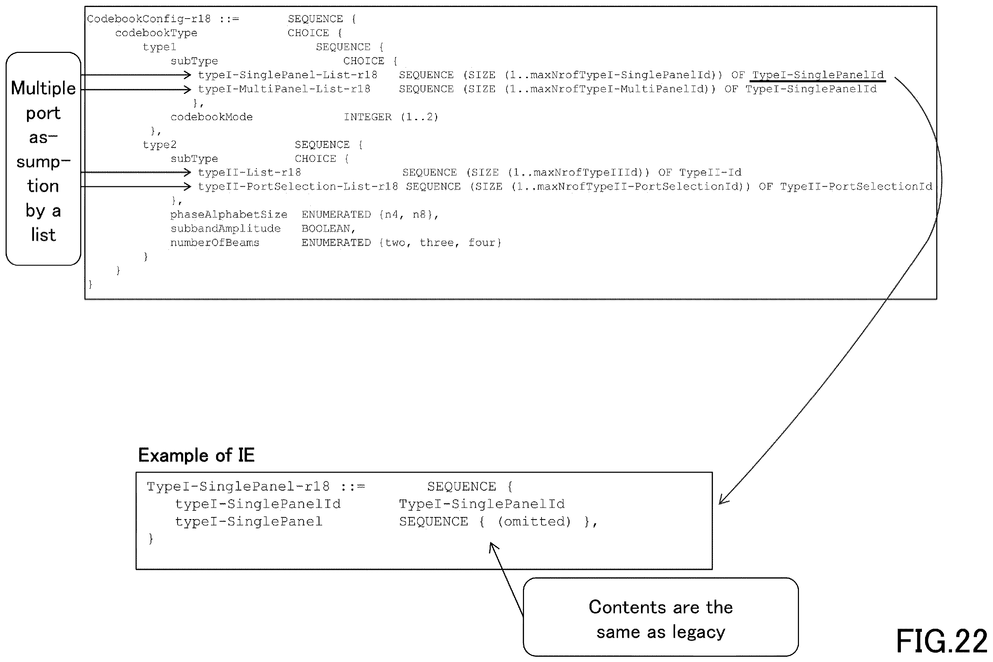

Fig. 22 is a drawing for describing an example (2) of a configuration related to a codebook for a plurality of CSI reports related to an embodiment of the present invention. As illustrated in Fig. 22, a plurality of port assumptions may be included in a codebook configuration by introducing a list.

The maximum number of the number of port assumptions (that is, maxNrofTypeI-SinglePanelId, maxNrofTypeI-MultiPanelId, maxNrofTypeIIId, and maxNrofTypeII-PortSelectionId illustrated in Fig. 22) may be defined in advance or may be configured based on the UE capability. It is to be noted that the contents of the information element TypeI-SinglePanel-R18 may be the same as the legacy information element.

Hereinafter, Operation 4-3) will be described.

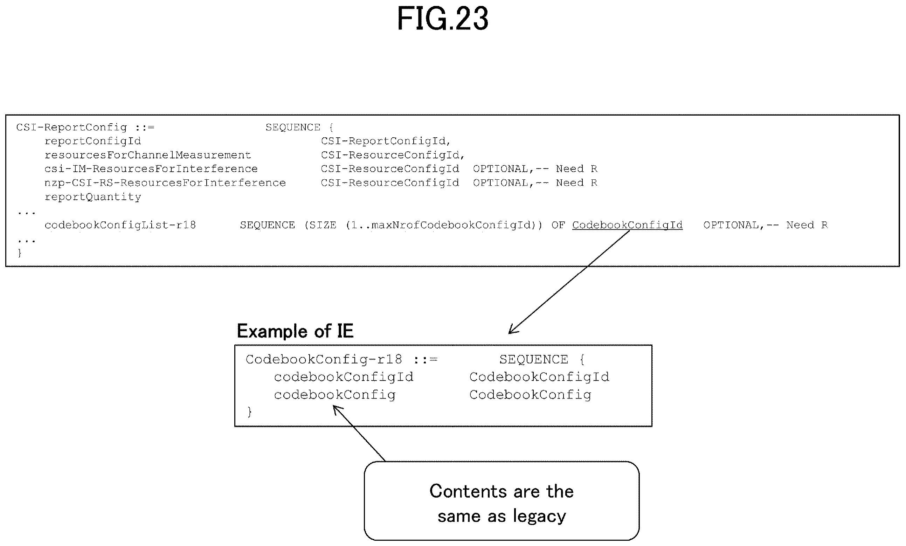

Fig. 23 is a drawing for describing an example (3) of a configuration related to a codebook for a plurality of CSI reports related to an embodiment of the present invention. The codebook configurations of one CSI report configuration may have the same codebook type or different codebook types (that is, TypeI-single/multi-panel, TypeII, TypeII PortSelection).

As illustrated in Fig. 23, different codebook types may be enabled to be configured by having a plurality of codebook configurations included in one CSI report configuration. The maximum number of codebook configurations (that is, maxNrofCodebookConfigId illustrated in Fig. 23) may be defined in advance or may be configured based on the UE capability.

According to the above-described Operation 4), the codebooks for the CSI report in a plurality of CSI reports can be efficiently configured.

According to an embodiment of the present invention, in order to reduce the network power consumption, the CSI report for which a plurality of spatial and/or power assumptions are applied can be flexibly configured and performed in a manner in which CSI measurement for a case of reduced number of antennas or reduced power can be performed.

In other words, the power consumption on the network side can be reduced by efficiently performing the CSI (Channel state information) report in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

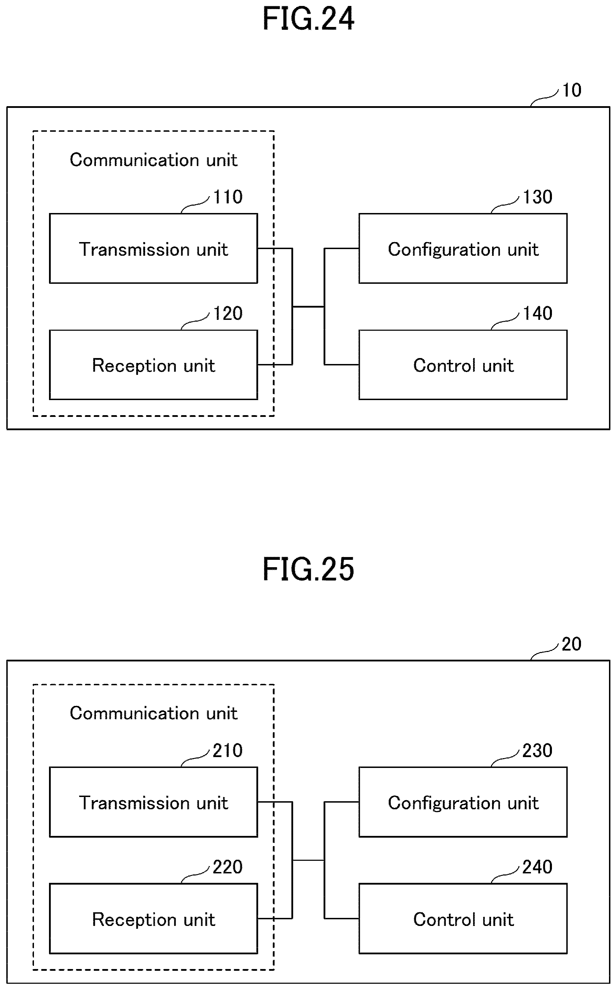

Fig. 24 is a drawing illustrating an example of a functional structure of a base station 10 according to an embodiment of the present invention. As shown in Fig. 24, the base station 10 includes a transmission unit 110, a reception unit 120, a configuration unit 130, and a control unit 140. The functional configuration illustrated in Fig. 24 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the CSI report.

The control unit 140 performs control that enables functions described in an embodiment of the present invention. In addition, the control unit 140 performs control related to a CSI report as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 25 is a drawing illustrating an example of a functional structure of a terminal 20 according to an embodiment of the present invention. As shown in Fig. 25, the terminal 20 includes a transmission unit 210, a reception unit 220, a configuration unit 230, and a control unit 240. The functional configuration illustrated in Fig. 25 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the CSI report.

The control unit 240 performs control that enables functions described in an embodiment of the present invention. In addition, the control unit 240 performs control related to a CSI report as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 24 and Fig. 25) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

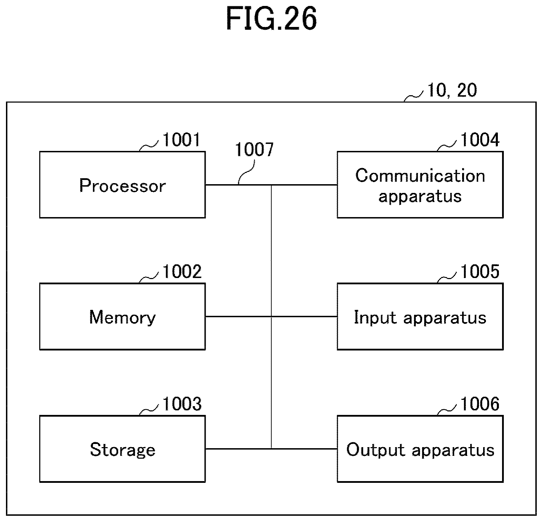

For example, the base station 10, the terminal 20, etc., according to an embodiment of the present disclosure may function as a computer for processing the radio communication method of the present disclosure. Fig. 26 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 24 may be implemented by control programs that are stored in the memory 1002 and that operate on the processor 1001. In addition, for example, the control unit 240 of the terminal 20 illustrated in Fig. 25 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

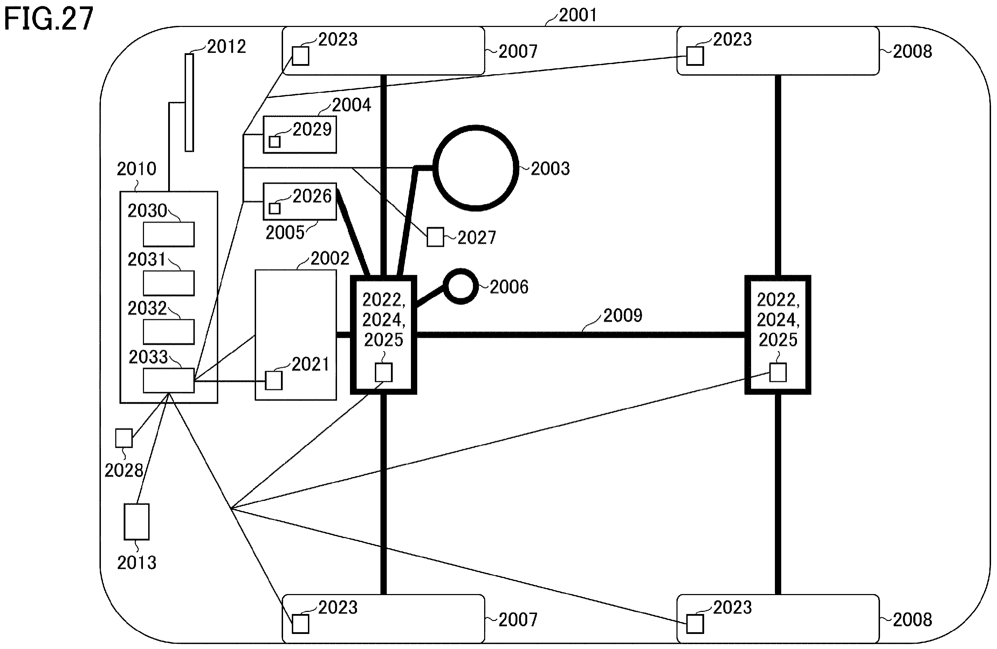

Fig. 27 shows an example of a configuration of a vehicle 2001. As shown in Fig. 27, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, a CSI (Channel State Information) report configuration in which a plurality of different spatial assumptions are applied; a control unit configured to perform measurement based on the CSI report configuration; and a transmission unit configured to transmit a CSI report to the base station, based on a result of the measurement. The control unit determines a feedback type to be reported to the base station, based on the CSI report configuration.

According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed. In other words, the power consumption on the network side can be reduced by efficiently performing the CSI (Channel state information) report in the wireless communication system.

The control unit may configure a common feedback type for the plurality of different spatial assumptions, based on the CSI report configuration. According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed.

The control unit may configure different feedback types for the plurality of different spatial assumptions, based on the CSI report configuration. According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed.

The control unit may assume that feedback types are independent in the plurality of different spatial assumptions. According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed.

The control unit may assume that some feedback types may be common for the plurality of different spatial assumptions. According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed.

In addition, according to an embodiment of the present invention, a measurement method performed by a terminal is provided. The measurement method includes: receiving, from a base station, a CSI (Channel State Information) report configuration in which a plurality of different spatial assumptions are applied; performing measurement based on the CSI report configuration; transmitting a CSI report to the base station, based on a result of the measurement; and determining a feedback type to be reported to the base station, based on the CSI report configuration.

According to the above-described configuration, in order to reduce the network power consumption, the CSI report for which a plurality of spatial and/or power assumptions are applied can be flexibly configured and performed in a manner in which CSI measurement for a case of reduced number of antennas or reduced power can be performed. In other words, the power consumption on the network side can be reduced by efficiently performing the CSI (Channel state information) report in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive, from a base station, a CSI (Channel State Information) report configuration in which a plurality of different spatial assumptions are applied;
a control unit configured to perform measurement based on the CSI report configuration; and
a transmission unit configured to transmit a CSI report to the base station, based on a result of the measurement, wherein
the control unit determines a feedback type to be reported to the base station, based on the CSI report configuration.

2. The terminal as claimed in claim 1, wherein
the control unit configures a common feedback type for the plurality of different spatial assumptions, based on the CSI report configuration.

3. The terminal as claimed in claim 1, wherein
the control unit the configures different feedback types for the plurality of different spatial assumptions, based on the CSI report configuration.

4. The terminal as claimed in claim 1, wherein
the control unit may assume that feedback types are independent in the plurality of different spatial assumptions.

5. The terminal as claimed in claim 1, wherein
the control unit assumes that some feedback types are common for the plurality of different spatial assumptions.

6. A measurement method performed by a terminal, the measurement method comprising:
receiving, from a base station, a CSI (Channel State Information) report configuration in which a plurality of different spatial assumptions are applied;
performing measurement based on the CSI report configuration;
transmitting a CSI report to the base station, based on a result of the measurement; and
determining a feedback type to be reported to the base station, based on the CSI report configuration.
